# EUROPÄISCHE PATENTSCHRIFT

(11) **EP 3 063 590 B1**
(45) Veröffentlichungstag und Bekanntmachung des Hinweises auf die Patenterteilung: **27.06.2018**
(21) Anmeldenummer: 14805498.4
(22) Anmeldetag: 28.10.2014
(51) Int. Cl.: G02F 1/39, G02F 1/35

(54) **VORRICHTUNG UND VERFAHREN ZUR ERZEUGUNG VON KURZEN STRAHLUNGSPULSEN**
APPARATUS AND METHOD FOR PRODUCING SHORT RADIATION PULSES
DISPOSITIF ET PROCÉDÉ DE GÉNÉRATION DE COURTES IMPULSIONS DE RAYONNEMENT

(30) Priorität: 28.10.2013 DE 102013017755
(43) Veröffentlichungstag der Anmeldung: 07.09.2016
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: GOTTSCHALL, Thomas, 07745 Jena (DE); LIMPERT, Jens, 07751 Jena (DE); TÜNNERMANN, Andreas, 99425 Weimar (DE); BAUMGARTL, Martin, 85567 Grafing (DE)
(74) Vertreter: Schneiders, Josef
(86) Internationale Anmeldenummer: PCT/EP2014/073079
(87) Internationale Veröffentlichungsnummer: WO 2015/063063

(56) Entgegenhaltungen:
- WO-A2-2013/052711
- YUJUN DENG ET AL: "Broadly tunable femtosecond parametric oscillator using a photonic crystal fiber", OPTICS LETTERS, Bd. 30, Nr. 10, 15. Mai 2005 (2005-05-15), Seite 1234, XP055170441, ISSN: 0146-9592, DOI: 10.1364/OL.30.001234
- YUE ZHOU ET AL: "Widely tunable picosecond optical parametric oscillator using highly nonlinear fiber", OPTICS LETTERS, OPTICAL SOCIETY OF AMERICA, Bd. 34, Nr. 7, 1. April 2009 (2009-04-01), Seiten 989-991, XP001545855, ISSN: 0146-9592

## Beschreibung

Die Erfindung betrifft eine Vorrichtung zur Erzeugung von kurzen Strahlungspulsen, insbesondere einen optisch parametrischen Oszillator, umfassend zumindest eine Pumpstrahlungsquelle zur Abgabe von Strahlung einer Pumpwellenlänge, und einen optischen Resonator.

Kurze Strahlungspulse sind in vielen Anwendungen notwendig. So werden beispielsweise für die nichtlineare Raman-Spektroskopie oder Raman-Mikroskopie mindestens zwei synchronisierte Pulszüge intensiver Strahlung mit einem bestimmten Frequenzabstand verwendet. Die Synchronisierung der Pulse beispielsweise zweier Strahlungsquellen oder Laserquellen kann dabei aktiv oder passiv realisiert werden. So erfolgt eine aktive Synchronisierung zum Beispiel, indem zwei Strahlungsquellen unterschiedlicher Zentralfrequenz durch eine elektronische Regelung aufeinander abgestimmt werden. Eine passive Synchronisierung erfolgt zum Beispiel, indem durch nichtlineare Prozesse eine erste Strahlungsquelle einen Strahlungsverstärker speist.

Eine besonders vorteilhafte Möglichkeit der Synchronisierung ist passiv, und zwar die direkte Erzeugung von Strahlung einer zweiten Wellenlänge mittels nichtlinearer Wellenlängenkonvertierung, beispielsweise ohne anschließende Nachverstärkung. Ohne Nachverstärkung muss der Prozess der Wellenlängenkonvertierung besonders effektiv sein. Eine mögliche Umsetzung hierfür ist der optische parametrische Oszillator (OPO).

Aus dem Stand der Technik sind unterschiedliche Ausführungsformen der nichtlinearen (faserbasierten) Frequenzkonversion bekannt. So werden beispielsweise neue Wellenlängen oder Frequenzen mittels des sogenannten "Soliton Self-Frequency Shift" erzeugt. Dabei wird die Strahlung einer gepulsten Laserquelle in eine hochgradig nichtlineare Faser eingekoppelt. Die Wellenlänge der Strahlung der ersten Strahlungsquelle muss sich hierzu nahe oder innerhalb des anomalen dispersiven Frequenzbereichs der nichtlinearen Faser befinden. In einer weiteren Variante wird mittels Ramanstreuung entlang der Faser in Richtung längerer Wellenlängen konvertiert.

Eine weitere Ausführungsform aus dem Stand der Technik ist die faserbasierte schmalbandige, also nur einen geringen Wellenlängenbereich aufweisende Erzeugung von Strahlung mittels spektraler Kompression und Frequenzverdoppelung. Bei nicht-linearer Raman-Mikroskopie ist es besonders vorteilhaft, schmalbandige, also nur einen geringen Wellenlängenbereich abdeckende Strahlungsquellen zu verwenden. Mittels spektraler Kompression eines Superkontinuums oder von Solitonen, welche in einer hochgradig nichtlinearen Faser entstanden sind, können die breitbandigen Spektren mittels Summenfrequenzmischung schmalbandig konvertiert werden.

Yujun Deng et al. (Optics Letters, Band 30, Nr. 10, 2005, Seiten 1234-1236) beschreiben einen optisch parametrischen Verstärker, dessen Resonator eine photonische Kristallfaser aufweist. Als Pumplaser kommt ein passiv modengekoppelter Yb-Faserlaser zum Einsatz. Die erzeugte Strahlung ist durch Variation der Pumpwellenlänge durchstimmbar.

Yue Zhou et al. (Optics Letters, Band 34, Nr. 7, 2009, Seiten 989-991) beschreiben einen vollständig faserbasierten optisch parametrischen Oszillator auf Basis einer hoch nichtlinearen Faser. Die durch den optisch parametrischen Prozess erzeugte Strahlung ist hinsichtlich der Wellenlänge abstimmbar. Hierzu wird die Pumpwellenlänge variiert.

Die WO 2013/052711 A1 beschreibt ein Verfahren zur Nutzung nichtlinearer optischer Effekte in einer Faser zum Zwecke der Erzeugung optischer Pulse per nichtlinearer Vierwellenmischung, z.B. zur Anwendung in einem optisch parametrischen Oszillator.

Davon ausgehend liegt der vorliegenden Erfindung die Aufgabe zugrunde, eine Vorrichtung und ein Verfahren zur Erzeugung von synchronen, kurzen Strahlungspulsen bereitzustellen, wobei eine Anpassung der Wellenlänge möglich ist bei gleichzeitig schmalbandiger Erzeugung der Strahlung bei einer bestimmten Wellenlänge.

Die Erfindung löst die Aufgabe durch eine Vorrichtung gemäß Anspruch 1.

Die Vorrichtung weist einen Resonator mit deutlicher Wellenlängenabhängigkeit der effektiven Resonatorlänge auf, wobei der Resonator einen nichtlinearen Wellenlängenkonverter zur Erzeugung von Strahlung bei einer ersten (Signal) und zweiten Wellenlänge (Idler), ein stark dispersives Element mit einer signifikant wellenlängenabhängigen Verzögerungscharakteristik, und ein Auskoppelelement zur zumindest teilweisen Auskopplung der Strahlung aus dem Resonator aufweist. Die Dispersion im dispersiven Element sollte dabei so bemessen sein, dass die Konversion gleichzeitig schmalbandig und mit einer hohen Effizienz ablaufen kann. Ebenso sollte die Pumpstrahlunsquelle den Resonator mit kurzen Strahlungspulsen speisen, die möglichst wenig durch nichtlineare Effekte an Schmalbandigkeit eingebüßt haben.

Die Erfindung bezieht sich insbesondere auf einen kristall- oder einen faserbasierten OPO, dessen Resonator ein Element mit signifikanter Dispersion aufweist. Die Dispersion bewirkt unterschiedliche effektive Resonatorlängen für Strahlung unterschiedlicher Wellenlängen oder Frequenzen.

Die Erfindung weist insbesondere gegenüber dem Stand der Technik den Vorteil auf, dass ein Ändern der Resonatorlänge des OPOs oder der Wiederholrate der Pumpstrahlungspulse eine Änderung der Wellenlängen der erzeugten Strahlung bewirkt, was gemäß dem Stand der Technik nur durch die Änderung der Wellenlänge der Strahlung der Pumpstrahlungsquelle oder durch Veränderung eines spektralen Filters im Resonator möglich war. Weiterhin wird durch die signifikante Dispersion im Rückkopplungszweig des Resonators die erzeugte Strahlung wesentlich schmalbandiger als in konventionellen OPOs.

Die Vorrichtung und das Verfahren gemäß der Erfindung erzeugen spektrale Bandbreiten der Wellenlänge der Strahlung, die nahezu dem Transformlimit der Pulsdauer der erzeugten Strahlung entsprechen. Diese Eigenschaften basieren auf der Tatsache, dass eine effiziente Konversion von Pump- in Strahlungsleistung nur erfolgen kann, wenn die im Resonator rückgekoppelten Pulse einen guten zeitlichen Überlapp mit Pumppulsen der Pumpstrahlungsquelle aufweisen.

Durch das dispersive Element im Resonator ist der zeitliche Überlapp der Pumpstrahlung und der Signalstrahlung nur für bestimmte Wellenlängenbereiche erfüllt. Diese Wellenlängenbereiche können über eine Verzögerungsscharakteristik, oder auch Dispersionscharakeristik genannt, des dispersiven Elements eingestellt werden.

Bei OPOs werden vorzugsweise Faserlaser als Strahlungsquellen verwendet, da Faserlaser die besondere Eigenschaft haben, Strahlung und insbesondere Laserstrahlung effizient zu erzeugen und zu verstärken. Faserlaser sind dabei besonderes wartungsarm und stabil gegen äußere Störungen. Allerdings erfordert die faserbasierte Erzeugung synchronisierter Pulse unterschiedlicher Wellenlängen Prozesse zur Frequenzkonvertierung mit Hilfe von Fasern.

In einer weiteren Ausführungsform wird eine Konvertierung der Wellenlänge durch eine sogenannte Vier-Wellenmischung ("Four-Wave-Mixing" = FWM) durchgeführt. Ähnlich der klassischen optisch parametrischen Frequenzerzeugung in nichtlinearen Kristallen kann in mikrostrukturierten Fasern Licht konvertiert werden. Bei der klassischen optisch parametrischen Frequenzerzeugung handelt es sich um einen Dreiwellenmischprozess der durch Kristall-Nichtlinearitäten ermöglicht wird. Da diese in Glasfasern nicht vorhanden sind, treten hier zuerst Nichtlinearitäten auf, die in der Form von Vier-Wellenmischung Strahlung konvertieren können. So kann unter Beachtung der Phasenanpassungsbedingung die Signalstrahlung, die beispielsweise für nichtlineare Raman-Spektroskopie notwendig ist, in Fasern erzeugt werden.

In einer vorteilhaften Ausführungsform der Erfindung ist das dispersive Element eine Einmodenfaser, oder auch Monomodefaser oder Singlemodefaser genannt. Dabei wird eine bestimmte Wellenlänge verzögert übertragen. Dadurch ergibt sich in einfacher Weise eine wellenlängenabhängige effektive Resonatorlänge.

Um die Wellenlänge gemäß der Erfindung einzustellen, stehen weitere Möglichkeiten zur Verfügung. So kann die Resonatorlänge, die Repetitionsrate der Pumpstrahlung, die Pumppulsdauer der Pumpstrahlung oder die Pumppulsform der Pumpstrahlung verändert werden. Diese Veränderungen können wechselweise oder gleichzeitig erfolgen, um beispielsweise durch eine Veränderung der Resonatorlänge und gleichzeitig durch eine Veränderung der Repetitionsrate der Pumpstrahlung eine Signalstrahlung bei einer bestimmten Wellenlänge mit einem möglichst kleinen Wellenlängenband oder Wellenlängenbereich zu erhalten.

Der Resonator weist eine variable Verzögerungsstrecke auf. Durch diese kann beispielsweise mechanisch mittels entsprechender Ablenkung der Strahlung die Resonatorlänge verändert werden und zwar unabhängig von der Wellenlänge der Strahlung im Resonator.

In einer weiteren Ausführungsform wird zur räumlichen Überlagerung der Strahlung im Resonator mit der Pumpstrahlung ein dichroitischer Spiegel (auch dielektrischer Spiegel genannt) verwendet.

In einer Ausführungsform mit einem faserintegrierten OPO kann zusätzlich oder anstatt des dichroitischen Spiegels ein Wellenlängenmultiplexer (auch wellenlängenselektiver Koppler genannt) verwendet werden. Dabei wird die Strahlung in einem Wavelength-Divison-Multiplexing Verfahren räumlich überlagert.

Die Erfindung bezieht sich im Weiteren noch auf ein Verfahren zur Erzeugung von kurzen Strahlungspulsen gemäß Anspruch 7.

Die Erfindung erlaubt damit die Erzeugung von kurzen Strahlungspulsen, wobei eine Anpassung der Wellenlänge möglich ist bei gleichzeitig schmalbandiger Erzeugung von Strahlung bei einer bestimmten Wellenlänge.

Weitere Merkmale, Einzelheiten und Vorteile der Erfindung ergeben sich aus dem Wortlaut der Ansprüche sowie aus der Beschreibung von Ausführungsbeispielen anhand der Abbildungen.

Die Erfindung wird in weiteren Einzelheiten anhand des nachfolgenden Textes mit Bezug auf bevorzugte Ausführungsbeispiele anhand der Abbildungen näher erläutert.

### Es zeigen:

- Fig. 1: einen optisch parametrischen Oszillator mit einer Pumpstrahlungsquelle und einem Resonator;
- Fig. 2: einen optisch parametrischen Oszillator mit einer eine variable Verzögerungsstrecke aufweisenden Pumpstrahlungsquelle;
- Fig. 3: einen optisch parametrischen Oszillator mit einem eine variable Verzögerungsstrecke aufweisenden Resonator;
- Fig. 4: einen optisch parametrischer Oszillator mit einer Vielzahl von eine variable Verzögerungsstrecke aufweisenden Pumpstrahlungsquellen; und
- Fig. 5: einen optisch parametrischer Oszillator mit einer Vielzahl von Pumpstrahlungsquellen und einem eine variable Verzögerungsstrecke aufweisenden Resonator.

Die Bezugszeichen und deren Bedeutung sind zusammengefasst in der Bezugszeichenliste. Im Allgemeinen bezeichnen dieselben Bezugszeichen dieselben Teile.

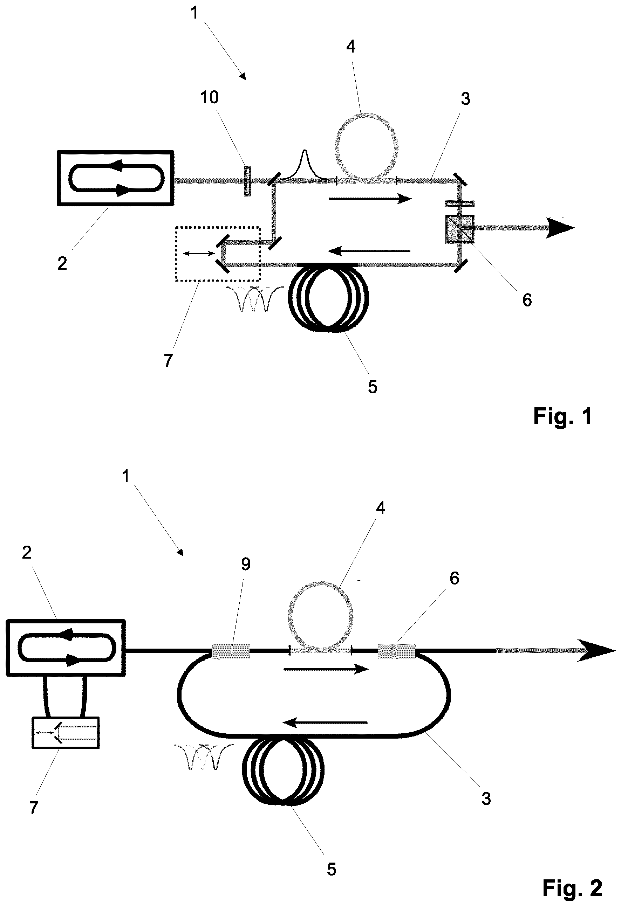

Fig. 1 zeigt eine schematische Anordnung einer Vorrichtung 1 zur Erzeugung von ultrakurzen Strahlungspulsen. Die Vorrichtung 1 ist ein optisch parametrischer Oszillator OPO. Die Vorrichtung umfasst dabei zumindest eine Pumpstrahlungsquelle 2 zur Abgabe von Strahlung einer Pumpwellenlänge in kurzen Pumppulsen (z.B. Pulsdauer 10-200 ps, Pulsrepetitionsrate 100 kHz bis 100 MHz, Zentralwellenlänge 1000-1100 nm, mittlere Leistung 100 mW bis 10 W) und einen Resonator 3 mit einer wellenlängenabhängigen Resonatorlänge. Die Pumpstrahlungsquelle 2 ist dabei vorzugsweise ein Pumplaser beispielsweise ein faserbasierter Master Oszillator Power Amplifier FMOPA. Zwischen dem Resonator 3 und der Pumpstrahlungsquelle 2 ist zusätzlich in der in Fig. 1 dargestellten Ausführungsform ein spektrales Filter vorgesehen zum Filtern der in den Resonator einzukoppelnden Strahlung.

Der Resonator 3 weist einen nichtlinearen Wellenlängenkonverter 4 (z.B. mikrostrukturierte Faser mit Nulldispersionswellenlänge für transversale Fundamentalmode im Bereich von 1025-1350 nm) zur Erzeugung von Strahlung bei einer ersten (Signal) und zweiten (Idler) Wellenlänge, ein dispersives Element 5 mit einer wellenlängenabhängigen Verzögerungscharakteristik und ein Auskoppelelement 6 zur zumindest teilweisen Auskopplung der Strahlung aus dem Resonator 3 auf. Der Resonator 3 weist darüber hinaus in der gezeigten Ausführungsform eine variable Verzögerungsstrecke 7 auf, welche ein Verändern der absoluten Resonatorlänge unabhängig von der Wellenlänge ermöglicht.

Durch Verändern der effektiven und absoluten Resonatorlänge kann eine Wellenlängencharakteristik der von dem OPO abgegebenen Strahlung variiert werden. Dies kann beispielsweise zusammen mit einer Repetitionsrate der Pumpstrahlungsquelle 2, der Pumppulsdauer der Pumpstrahlungsquelle 2 und/oder der Pumppulsform der Pumpstrahlungsquelle 2 erfolgen. Damit kann eine schmalbandige Strahlung erzeugt werden.

Das dispersive Element 5 (z.B. optische Faser mit einer Dispersion im Bereich von 10-100 ps/nm, vorzugsweise ca. 30 ps/nm und einer Länge von 10-1000 m, vorzugsweise ca. 250 m) bewirkt eine zeitliche Verzögerung der im Resonator rückgekoppelten Pulse im Bereich von 95-100% des reziproken Wertes der Repetitionsrate der Pumppulse oder eines Vielfachen davon. Gleichzeitig kann das dispersive Element 5 eine zeitliche Verlängerung der Pulse im Bereich von 1-500 ps je nm spektraler Bandbreite bewirken.

Durch das dispersive Element 5 kann beispielsweise die spektrale Bandbreite der Strahlung stark verringert werden. Nur im zeitlichen Überlappungsbereich des Pumppulses mit den im Zeitbereich spektral hintereinander gestaffelten Frequenzkomponenten der rückgekoppelten Strahlung erfolgt eine Verstärkung. Im eingeschwungenen Zustand ist die erzeugte Strahlung derart schmalbandig, dass eine möglicherweise entstehende dispersive Pulsverlängerung kaum einen Einfluss hat. Damit können je nach Stärke der Dispersion nahe transformlimitierte spektrale Bandbreiten erreicht werden.

Die variable Verzögerungsstrecke 7 bewirkt in Kombination mit dem dispersiven Element 5 gemäß der Erfindung z.B. eine Wellenlängenänderung des Signals von 1 nm pro 10 mm veränderter Resonatorlänge.

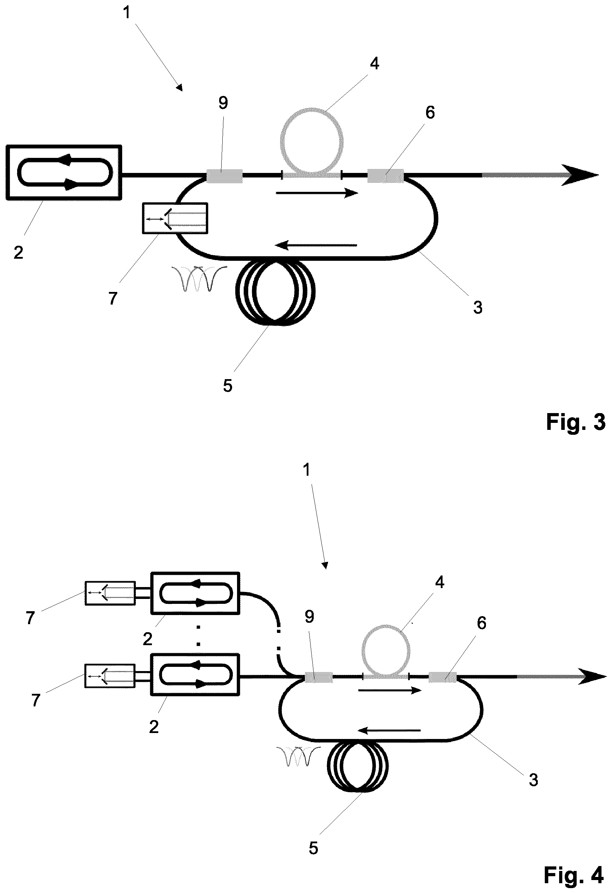

Fig. 2 zeigt eine Ausführungsform der Vorrichtung 1 ähnlich der in Fig. 1 dargestellten Vorrichtung 1, wobei hier nicht der Resonator eine variable Verzögerungsstrecke 7 aufweist, sondern die Pumpstrahlungsquelle 2 mit einer variablen Verzögerungsstrecke versehen ist. In Fig. 3 ist eine Variante der in Fig. 1 dargestellten Ausführungsform dargestellt. Ein Wellenlängenmultiplexer 9 vorgesehen. Der Wellenlängenmultiplexer 9 ermöglicht die Überlagerung der im Resonator 3 umlaufenden Strahlung mit der Strahlung der Pumpstrahlungsquelle 2. Insbesondere wird der Wellenlängenmultiplexer 9 bei einem faserbasierten OPO verwendet.

Die dargestellten unterschiedlichen Ausführungsformen der Vorrichtung 1 können dabei insbesondere als faserbasierter optisch parametrischer Oszillator FOPO ausgebildet sein. Dabei wird beispielsweise ein faserbasierter Master Oszillator Power Amplifier FMOPA verwendet, um Strahlung bereitzustellen, welche in den nichtlinearen Wellenlängenkonverter übertragen wird, beispielsweise im Bereich des Ytterbium Emissionsbereiches von 1030 nm bei Verwendung eines Ytterbium basierten FMOPA.

Der Wellenlängenkonverter erzeugt durch Vierwellenmischung FWM Strahlung einer Signal- und Idler-Strahlung. Durch die Wahl beispielsweise einer Nulldispersionswellenlänge im Bereich von 1035 bis 1070 nm kann eine Signalstrahlung mit einer Wellenlänge von 750 bis 1000nm und, entsprechend der Energieerhaltung, eine Idler-Strahlung mit einer Wellenlänge von 1100nm bis 1700nm erzeugt werden. Dabei hängt die Bandbreite der Verstärkung der FWM von der Phasenanpassung für den parametrischen Prozess ab.

Durch eine Kombination einer breitbandigen Halbwellenplatte mit einem Polarisationswürfel kann der Grad der Auskopplung des Auskoppelelements 6 bestimmt werden. Ein kleiner Teil der Strahlung im Resonator 3, vorzugsweise weniger als 10%, bleibt im Resonator 3 und wird in das dispersive Element 5 eingekoppelt. Der Rest der Strahlung wir ausgekoppelt und steht der Anwendung, beispielsweise der Raman-Spektroskopie oder Raman-Mikroskopie, zur Verfügung.

In dem dispersiven Element 5 wird in Abhängigkeit der Stärke der Dispersion die rückgekoppelte Strahlung zeitlich verbreitert. Gleichzeitig wird die Strahlung in Verbindung mit der variablen Verzögerungsstrecke 7 derart verzögert, dass die rückgekoppelte Strahlung mit einem der nächsten Pumppulse zeitlich in dem Wellenlängenkonverter 4 überlappt.

Für das räumliche Überlagern der Strahlung mit den Pumppulsen kann ein entsprechender dichroitischer Spiegel 8 verwendet werden. In einer faserintegrierten Lösung wird statt des dichroitischen Spiegels 8 ein WDM 9 verwendet, der die rückgekoppelte Strahlung mit einem der nächsten Pumppulse überlagert.

Ebenfalls ist es möglich, einen spektralen Filter 10 in dem Resonator vorzusehen, um dadurch innerhalb der Verstärkungsbandbreite der FWM eine veränderbare Strahlung zu erzeugen. In manchen Fällen ist es notwendig, entsprechend der Dispersion, die Resonatorlänge der Umlaufzeit der jeweiligen gefilterten Strahlung anzupassen. Alternativ dazu kann beispielsweise mittels der dispersiven Rückkopplung die Wellenlänge der Strahlung innerhalb der Verstärkungsbandbreite des parametrischen Verstärkers ausgewählt werden, ohne zusätzlichen spektralen Filter.

Mit dem ersten Pumppuls in dem Wellenlängenkonverter 4 werden spontan erzeugte Photonen beispielsweise des FWM Prozesses über den Bereich des phasenangepassten Verstärkungsbereiches erzeugt. Die Pulsdauer der entstandenen Strahlung bewegt sich im Bereich der Pulsdauer des Pumppulses.

Die Dispersion des dispersiven Elements 5 bewirkt, dass die Pulsdauer der Strahlung nach der Rückkopplung, vorzugsweise durch eine Monomodefaser, die der Pumppulse übersteigt. Je nach Verzögerung der Strahlung relativ zum nächsten zeitlich überlagerten Pumppuls kann damit, innerhalb der Verstärkungsbandbreite der FWM, Strahlung erzeugt und angepasst werden. Der Pumppuls wirkt dabei sozusagen als Gate innerhalb der dispersiv gestreckten Strahlung und selektiert so bestimmte Frequenzen im Resonator 3.

Die Dispersion bewirkt beispielsweise beim Verlängern der effektiven Resonatorlänge eine spektrale Verschiebung der Signalstrahlung in Richtung kürzerer Wellenlängen. Insbesondere erzeugt die Verzögerung aus der variablen Verzögerungsstrecke 7 und dem dispersiven Element 5 eine zeitliche Verzögerung der rückgekoppelten Strahlung im Bereich von bis zu 10 ns.

Fig. 4 zeigt eine Ausführungsform der Vorrichtung 1 gemäß der Ausführungsform aus Fig. 2, wobei eine Vielzahl von Pumpstrahlungsquellen 2 vorgesehen ist, welche jeweils eine variable Verzögerungsstrecke aufweisen, um unterschiedliche Pulsrepetitionsraten für verschiedene Pumpwellenlängen zu erreichen. Damit kann beispielsweise eine Vielzahl von Pumppulsquellen zur Konvertierung ein und denselben Resonator verwenden.

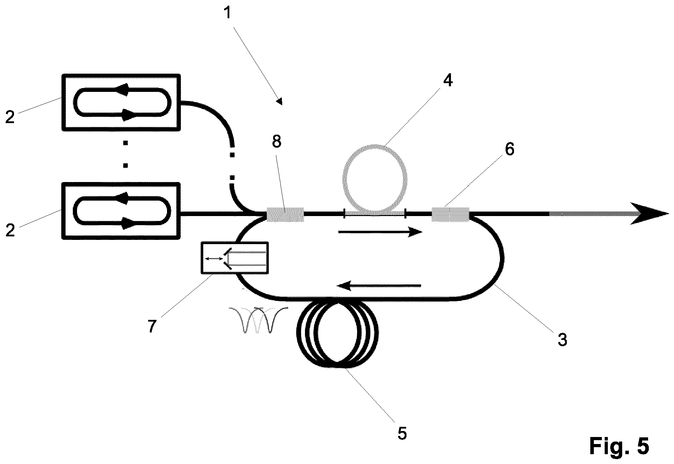

Fig. 5 zeigt eine Ausführungsform der Vorrichtung 1 gemäß der Ausführungsform aus Fig. 1, wobei eine Vielzahl von Pumpstrahlungsquellen 2 vorgesehen ist, wobei allerdings im Unterschied zu Fig. 4 der Resonator 3 eine variable Verzögerungsstrecke aufweist.

## Patentansprüche

1. Vorrichtung (1) zur Erzeugung von kurzen Strahlungspulsen, nämlich optisch parametrischer Oszillator, umfassend zumindest
eine Pumpstrahlungsquelle (2), vorzugsweise einen Pumplaser, zur Abgabe von Strahlung einer Pumpwellenlänge in Pumppulsen, und
einen optischen Resonator (3) mit einer wellenlängenabhängigen effektiven Resonatorlänge, wobei der Resonator (3) aufweist:
- einen nichtlinearen Wellenlängenkonverter (4) zur Erzeugung von Strahlung mit wenigstens einer ersten und zweiten Wellenlänge;
- ein dispersives Element (5) mit einer wellenlängenabhängigen Verzögerungscharakteristik; und
- ein Auskoppelelement (6) zur zumindest teilweisen Auskopplung von Strahlung aus dem Resonator,
**dadurch gekennzeichnet, dass** das dispersive Element (5) eine optische Faser mit einer Dispersion im Bereich von 10-100 ps/nm und einer Länge von 10-1000 m ist, wobei
- der Resonator (3) eine variable Verzögerungsstrecke zur Veränderung der effektiven Resonatorlänge aufweist, und/oder
- die Pumpstrahlungsquelle (2) eine variable Repetitionsrate und/oder eine variable Pumppulsform aufweist.

2. Vorrichtung (1) nach Anspruch 1, wobei das dispersive Element (5) eine Einmodenfaser ist.

3. Vorrichtung (1) nach einem der Ansprüche 1 bis 2, wobei die Pumpstrahlungsquelle (2) eine variable Verzögerungsstrecke aufweist.

4. Vorrichtung (1) nach einem der Ansprüche 1 bis 3, wobei der Resonator (3) einen dichroitischen Spiegel (8) zum räumlichen Überlagern der Strahlung der Pump-Wellenlänge mit der Strahlung der ersten oder zweiten Wellenlänge aufweist.

5. Vorrichtung nach einem der Ansprüche 1 bis 4, wobei der Resonator einen Wellenlängenmultiplexer WDM (9) aufweist.

6. Vorrichtung (1) nach einem der Ansprüche 1 bis 5, wobei der Resonator (3) ein spektrales Filter (10) aufweist.

7. Verfahren zur Erzeugung von ultrakurzen Strahlungspulsen mittels eines optisch parametrischen Oszillators, umfassend zumindest folgende Schritte
Abgabe von Strahlung einer Pumpwellenlänge durch eine Pumpstrahlungsquelle (2), vorzugsweise einen Pumplaser, in Pumppulsen und
Rückkopplung von Strahlung in einem optischen Resonator mit einer wellenlängenabhängigen effektiven Resonatorlänge, wobei die Rückkopplung folgende Schritte umfasst:
- Erzeugung von Strahlung bei wenigstens einer ersten und zweiten Wellenlänge durch einen nichtlinearen Wellenlängenkonverter (4);
- Verzögerung der Strahlung durch ein dispersives Element (5) mit einer wellenlängenabhängigen Verzögerungscharakteristik; und
- zumindest teilweise Auskopplung von Strahlung aus dem Resonator durch ein Auskoppelelement (6),
**dadurch gekennzeichnet,**
**dass** das dispersive Element (5) eine optische Faser mit einer Dispersion im Bereich von 10-100 ps/nm und einer Länge von 10-1000 m ist, wobei die Wellenlänge der erzeugten Strahlung geändert wird durch
- Veränderung der effektiven Resonatorlänge des Resonators (3) mittels einer variablen Verzögerungsstrecke, und/oder
- Veränderung der Repetitionsrate und/oder der Pumppulsform der Pumpstrahlungsquelle (2).

## Claims

1. Apparatus (1) for generating short radiation pulses, namely an optical parametric oscillator, comprising at least
a pump radiation source (2), preferably a pump laser, for delivering radiation at a pump wavelength in pump pulses, and
an optical resonator (3) having a wavelength-dependent effective resonator length, wherein the resonator (3) comprises:
- a non-linear wavelength converter (4) for producing radiation with at least a first and a second wavelength;
- a dispersive element (5) having a strong wavelength-dependent delay characteristic; and
- a coupling-out element (6) for at least partially coupling-out the radiation from the resonator,
**characterized in that** the dispersive element (5) is an optical fiber having a dispersion in the range of 10-100 ps/nm and a length of 10-1000 m, wherein
- the resonator (3) comprises a variable delay line for variation of the effective resonator length, and/or
- the pump radiation source (2) has a variable repetition rate and/or a variable pump pulse shape.

2. Apparatus (1) according to claim 1, wherein the dispersive element (5) is a single-mode fiber.

3. Apparatus (1) according to any of claims 1 to 2, wherein the pump radiation source (2) comprises a variable delay line.

4. Apparatus (1) according to any of the claims 1 to 3, wherein the resonator (3) comprises a dichroic mirror (8) for spatially superimposing the radiation of the pump wavelength with the radiation of the first or second wavelength.

5. Apparatus according to any of the claims 1 to 4, wherein the resonator comprises a wavelength multiplexer WDM (9).

6. Apparatus (1) according to any of the claims 1 to 5, wherein the resonator (3) comprises a spectral filter.

7. Method for generating ultrashort radiation pulses by means of an optical parametric oscillator, said method comprising at least the following steps:
emission of radiation of a pump wavelength through a pump radiation source (2), preferably a pump laser, and
feedback of radiation in an optical resonator having a wavelength-dependent effective resonator length, wherein the feedback comprises the following steps:
- generating radiation at least at a first and a second wavelength through a non-linear wavelength converter (4);
- delay of radiation through a dispersive element (5) having a wavelength-dependent delay characteristic; and
- at least partially coupling-out of radiation from the resonator through a coupling-out element (6),
**characterized in that** the dispersive element (5) is an optical fiber having a dispersion in the range of 10-100 ps/nm and a length of 10-1000 m, wherein the wavelength of the generated radiation is varied by
- variation of the effective resonator length of the resonator (3) by means of a variable delay line, and/or
- variation of the repetition rate and/or the pump pulse shape of the pump radiation source (2).

## Revendications

1. Dispositif (1) pour générer des impulsions de rayonnement courtes, à savoir oscillateur paramétrique optique, comprenant au moins
une source de rayonnement de pompage (2), de préférence un laser de pompage, servant à délivrer un rayonnement à une longueur d'onde de pompage en impulsions de pompage, et
un résonateur optique (3) ayant une longueur de résonateur effective dépendante de la longueur d'onde, le résonateur (3) possédant :
- un convertisseur de longueur d'onde (4) non linéaire destiné à générer un rayonnement ayant au moins une première et une deuxième longueur d'onde ;
- un élément dispersif (5) ayant une caractéristique de retard dépendante de la longueur d'onde ; et
- un élément de découpage (6) destiné à découpler au moins partiellement le rayonnement hors du résonateur,
**caractérisé en ce que**
l'élément dispersif (5) est une fibre optique ayant une dispersion dans la plage de 10 à 100 ps/nm et une longueur de 10 à 1000 m,
- le résonateur (3) possédant un segment de retard variable destiné à modifier la longueur de résonateur effective et/ou
- la source de rayonnement de pompage (2) possédant une fréquence de répétition variable et/ou une forme d'impulsion variable.

2. Dispositif (1) selon la revendication 1, l'élément dispersif (5) étant une fibre monomodale.

3. Dispositif (1) selon l'une des revendications 1 à 2, la source de rayonnement de pompage (2) possédant un segment de retard variable.

4. Dispositif (1) selon l'une des revendications 1 à 3, le résonateur (3) possédant un miroir dichroïque (8) servant à la superposition dans l'espace du rayonnement à la longueur d'onde de pompage avec le rayonnement à la première ou à la deuxième longueur d'onde.

5. Dispositif (1) selon l'une des revendications 1 à 4, le résonateur possédant un multiplexeur de longueurs d'onde WDM (9).

6. Dispositif (1) selon l'une des revendications 1 à 5, le résonateur (3) possédant un filtre spectral (10) .

7. Procédé pour générer des impulsions de rayonnement ultra-courtes au moyen d'un oscillateur paramétrique optique, comprenant au moins les étapes suivantes
délivrance du rayonnement à une longueur d'onde de pompage par une source de rayonnement de pompage (2), de préférence un laser de pompage, en impulsions de pompage, et
réinjection du rayonnement dans un résonateur optique ayant une longueur de résonateur effective dépendante de la longueur d'onde, la réinjection comprenant les étapes suivantes :
- génération d'un rayonnement ayant au moins une première et une deuxième longueur d'onde par un convertisseur de longueur d'onde (4) non linéaire ;
- retardement du rayonnement par un élément dispersif (5) ayant une caractéristique de retard dépendante de la longueur d'onde ; et
- découplage au moins partiel du rayonnement hors du résonateur par un élément de découpage (6),
**caractérisé en ce que**
l'élément dispersif (5) est une fibre optique ayant une dispersion dans la plage de 10 à 100 ps/nm et une longueur de 10 à 1000 m, la longueur d'onde du rayonnement généré étant modifiée par
- modification de la longueur de résonateur effective du résonateur (3) au moyen d'un segment de retard variable et/ou
- modification de la fréquence de répétition variable et/ou de la forme d'impulsion de la source de rayonnement de pompage (2).
